# FASCICULE DE BREVET EUROPEEN

(11) **EP 1 785 663 B1**
(45) Date de publication et mention de la délivrance du brevet: **03.06.2009**
(21) Numéro de dépôt: 06291752.1
(22) Date de dépôt: 13.11.2006
(51) Int. Cl.: F16P 5/00, F41A 21/48

(54) **Dispositif de sécurité de contact**
Vorrichtung zum Sicherstellen von Kontakt
Contact security device

(30) Priorité: 14.11.2005 FR 0511497
(43) Date de publication de la demande: 16.05.2007
(73) Titulaire: CTA International, 18023 Bourges Cedex (FR)
(72) Inventeur: Lenoble, Michel, 18000 Bourges (FR); Baubois, Michel, 18000 Bourges (FR)
(74) Mandataire: Célanie, Christian

(56) Documents cités:
- FR-A- 2 848 654

## Description

Le secteur technique de la présente invention est celui des dispositifs de sécurité permettant de contrôler la liaison de deux pièces mécaniques.

La prise en compte des exigences de sécurité dans les mécanismes présentant un danger immédiat pour les opérateurs impose d'intégrer un composant indépendant du fonctionnement du mécanisme pour annihiler la poursuite de son action, C'est par exemple le cas de la liaison de deux pièces mécaniques à un instant (t) dont l'une est motrice et l'autre entraînée. La poursuite de l'action motrice de l'une des pièces mécaniques peut s'avérer très dangereuse pour un opérateur affecté à la conduite du mécanisme. Ainsi, dans le cas d'une arme dans laquelle le tube vient en contact avec le manchon de culasse, on doit s'assurer de la parfaite jonction de ces deux pièces afin que l'arbre de transmission soit parfaitement verrouillé en rotation. Ce type de problème se retrouve dans les commandes d'arrêt des générateurs d'énergie hydraulique, pneumatique, électrique ou mécanique si les deux pièces restent éloigner l'une de l'autre de quelques dixièmes de millimètres, présentant un danger pour les utilisateurs ou l'environnement. Il convient donc de concevoir un dispositif de sécurité garantissant le verrouillage mécanique en rotation de l'arbre de transmission si le tube n'est pas en position sur le manchon c'est-à-dire s'il subsiste un épart même très faible entre eux.

Le brevet FR-2848654 décrit un dispositif de sécurité de contact électrique entre deux pièces mécaniques mobiles l'une par rapport à l'autre pour garantir la cinématique interne par libération ou initiation d'un moyen de commande mettant en oeuvre une tige portant une crémaillère. Aucun moyen d'amplification n'est décrit dans ce brevet.

Le but de la présente invention est de fournir un dispositif de sécurité de contact entre deux pièces en mouvement pour garantir leur parfaite liaison et interdire une transmission de mouvement lorsque ce contact n'est pas réalisé.

L'invention a donc pour objet un dispositif de sécurité de contact entre deux pièces mécaniques mobiles l'une par rapport à l'autre pour garantir la cinématique interne par libération ou initiation d'un moyen de commande, **caractérisé en ce qu**'il comporte un boîtier de sécurité destiné à être relié à l'une desdites pièces et renfermant un palpeur actionné par le mouvement de l'autre pièce et un moyen amplificateur constitué d'un levier amplificateur actionné par le palpeur et d'un verrou de blocage actionné par le levier amplificateur en prise sur le moyen de commande afin de transformer un micro-déplacement rectiligne du palpeur ou du verrou de blocage en un mouvement circulaire de grande ampleur de l'autre élément du palpeur ou du verrou de blocage.

On comprend que le dispositif selon l'invention peut être couplé à une commande manuelle agissant sur le palpeur peut également assurer le blocage de l'arbre de transmission en une fraction de tour et trouver en première application l'immobilisation rapide des outils coupants du type meules, lames, chaîne de tronçonnage, forêts, fraises, ...

Selon une autre caractéristique de l'invention, le palpeur est actionné en translation et le levier et le verrou sont actionnés en rotation.

Selon encore une autre caractéristique de l'invention, le moyen de commande est représenté par un distributeur hydraulique ou pneumatique, ou un interrupteur électrique.

Selon encore une autre caractéristique de l'invention, le moyen de commande est représenté par un arbre de transmission, les deux pièces mécaniques étant constituées par un tube d'arme et un manchon de culasse.

Selon une autre caractéristique de l'invention, le boîtier de sécurité est fixé sur le manchon de culasse au voisinage de l'arbre de transmission.

Avantageusement, le verrou de blocage est en prise sur une came portée par l'arbre de transmission.

Selon encore une caractéristique, le boîtier de sécurité se présente sous la forme d'une pièce monobloc munie d'un premier alésage dans lequel coulisse le palpeur et un deuxième alésage dans lequel sont insérés le levier amplificateur et le verrou, les deux alésages étant disposés selon des directions sensiblement perpendiculaires.

Avantageusement, le levier amplificateur et le verrou sont en contact l'un de l'autre au niveau d'une came pour assurer leur rotation chacun autour d'un axe fixé sur le boîtier de sécurité.

Avantageusement encore, le palpeur et le verrou sont soumis à l'action d'un moyen de rappel.

Avantageusement encore, le verrou de blocage est en appui sur une butée réglable.

Avantageusement encore, le levier amplificateur pivote autour d'un axe réglable par l'excentrique.

Un tout premier avantage du dispositif selon l'invention réside dans la garantie de l'interdiction de fonctionnement du mécanisme dangereux pour un opérateur si les deux pièces ne sont correctement assemblées.

Un autre avantage réside dans la possibilité du blocage complet du moyen de commande si la pièce mobile n'est pas amenée dans sa position nominale de fonctionnement.

Un autre avantage réside dans le fait que le verrou assure le blocage en rotation de l'arbre de transmission tant que la rotation du verrou n'est pas complète.

D'autres caractéristiques, détails et avantages de l'invention ressortiront plus clairement de la description donnée ci-après à titre indicatif en relation avec des dessins dans lesquels :
- la figure 1 représente une vue de deux pièces mécaniques destinées à être assemblées,
- les figures 2 et 3 représentent une vue du boîtier de sécurité avec son mécanisme,
- les figures 4 et 5 représentent des vues perspectives montrant le mécanisme de sécurité en position assemblée,
- la figure 6 représente le verrou de blocage,
- la figure 7 représente le levier amplificateur,
- la figure 8 représente le palpeur,
- la figure 9 représente une vue de l'arbre de transmission, et
- la figure 10 est une coupe montrant la roue à rochet portée par l'arbre de transmission.

Dans la description qui suit, on va décrire une application particulière de l'invention dans laquelle le dispositif de sécurité garantit le contact entre deux pièces mécaniques par le blocage ou non d'un arbre de transmission. Il va de soi que le dispositif selon l'invention peut être mis en oeuvre de façon à commander n'importe quelle pièce mécanique, à actionner un interrupteur électrique, à provoquer le contact électrique entre deux pièces, et plus généralement à engendrer une commande afin d'autoriser ou d'interdire la transmission d'un ordre. Le moyen de commande peut donc être représenté par un distributeur hydraulique ou pneumatique, ou un interrupteur électrique.

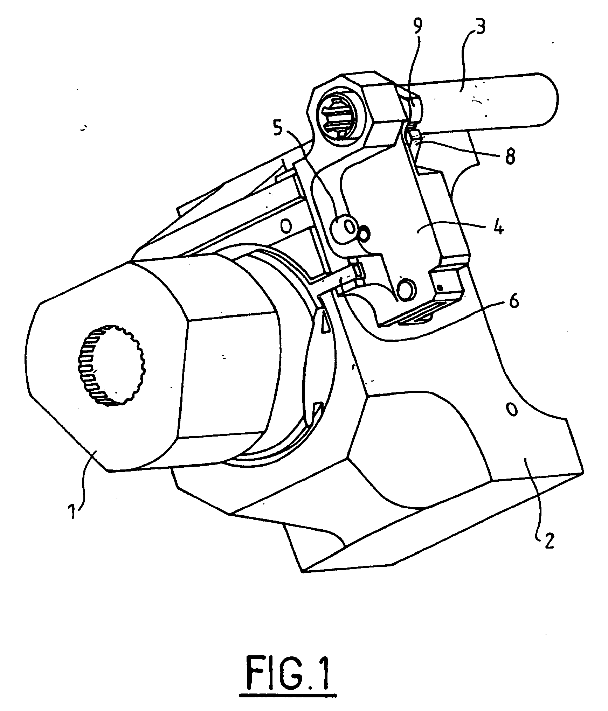

Sur la figure 1 qui est une vue perspective d'un tube 1 d'arme partiellement représenté et d'un manchon de culasse 2 venant en contact l'un de l'autre au cours des séances de tir. On comprend qu'un contact parfait entre ces deux pièces doit être assuré afin d'éviter toute fuite de gaz entraînant un danger pour un opérateur situé à proximité. Lorsque le contact entre ces deux pièces n'est pas parfait, la séquence suivante doit être interrompue par le blocage d'un arbre de transmission 3 fixé sur le manchon. A cette fin, le dispositif de sécurité de contact comporte un boîtier de sécurité 4 relié ici au manchon par une fixation appropriée, des vis 5 par exemple. Ce boîtier 4 renferme un palpeur 6 actionné en translation par le tube 1 et un moyen amplificateur constitué d'un levier amplificateur 7 (non visible sur cette figure) actionné par le palpeur 6 et d'un verrou de blocage 8 actionné par le levier amplificateur en prise sur l'arbre de transmission 3 portant une roue à rochet 9. Cette structure est prévue pour garantir la cinématique interne par libération ou initiation du moyen de commande en transformant un micro-déplacement rectiligne du palpeur 6 en un mouvement circulaire de grande ampleur comme cela va être expliqué ci-après.

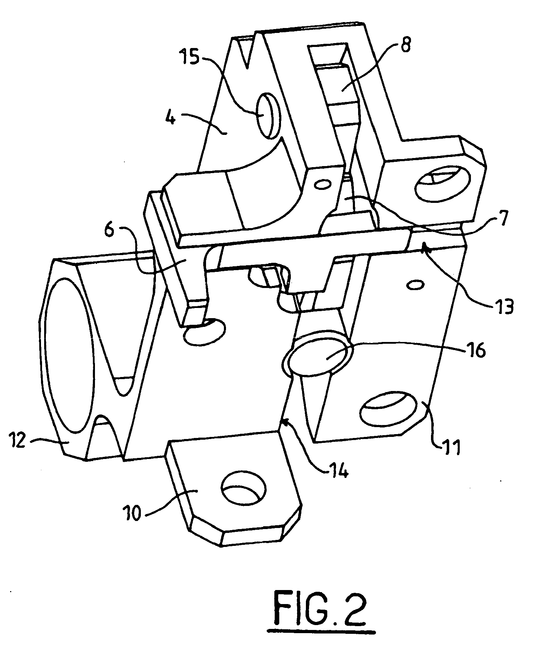

La vue en perspective représentée sur la figure 2 montre le boîtier de sécurité 4 se présentant sous la forme d'une pièce usinée munie d'ailes 10 et 11 de fixation sur le manchon 2 à l'aide de vis. Le boîtier 4 comporte de plus une chape 12 de réception de l'arbre de transmission 3.

Le boîtier 4 comporte un premier alésage 13 dans lequel est inséré le palpeur 6 pour des déplacements en translation, alésage réalisé en concordance avec la configuration du palpeur. Cet alésage 13 est pratiqué suivant la direction de déplacement de la pièce mobile 1. Un deuxième alésage 14 est prévu dans le boîtier 4 dans lequel le levier amplificateur 7 et le verrou 8 sont insérés. Le verrou 8 est fixé au moyen de l'axe transversal 15 autour duquel il peut pivoter et la position de ce levier est réglable à l'aide d'une butée 16 vissée dans le boîtier 4.

On notera sur la figure que les deux alésages 13 et 14 sont disposés selon des directions perpendiculaires.

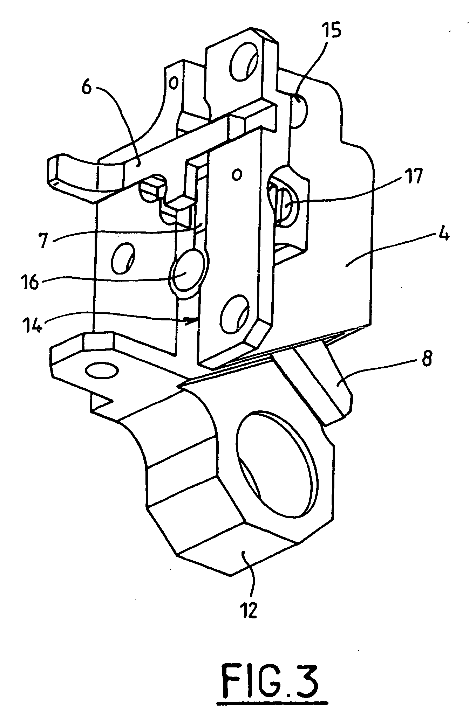

Sur la figure 3, on retrouve les mêmes éléments que sur la figure 2. Cette figure 3 montre la fixation du levier amplificateur 7 à l'aide de l'axe 17 et l'on voit que l'extrémité inférieure du verrou 8 est en saillie au voisinage de la chape 12.

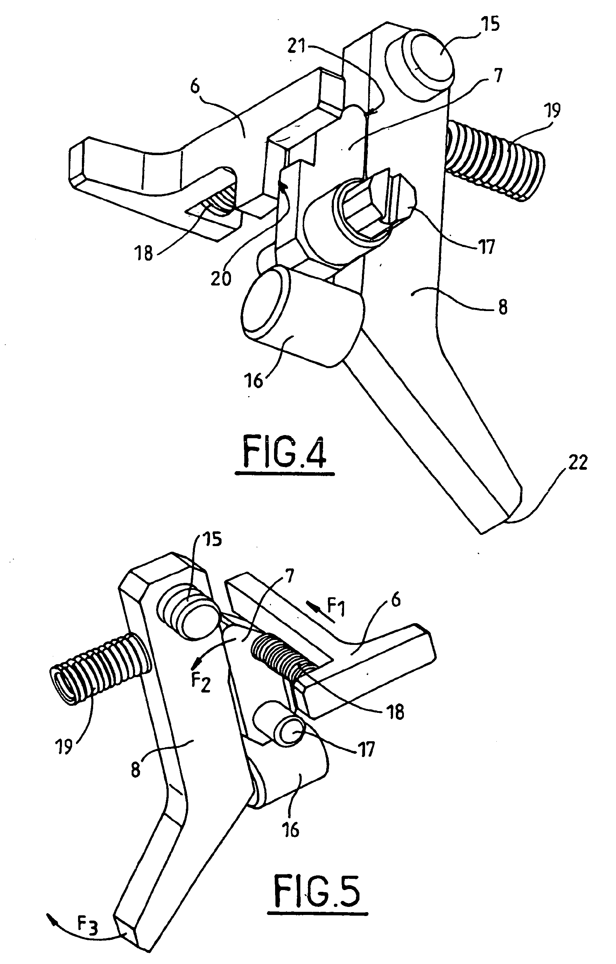

Les figures 4 et 5 permettent d'illustrer la disposition spatiale du palpeur 6, du levier amplificateur 7 et du verrou 8. On voit que le palpeur est soumis à l'action d'un ressort 18 de rappel disposé entre une aile du palpeur et le boîtier de sécurité 4. Ce ressort garantit en l'absence d'effort externe sur le palpeur, le maintien du contact permanent du palpeur avec le boîtier de sécurité. De même, le verrou 8 est soumis à l'action d'un ressort de rappel 19 prenant appui sur le boîtier 4 pour garantir le contact permanent entre ce verrou et le levier et apte à ramener constamment le verrou contre la butée 16. Le palpeur 6 et le levier 7 sont en contact mutuel le long d'une surface d'appui 20 afin que la translation du palpeur 6 engendre une rotation du levier 7 autour de l'axe 17. Le levier 7 et le verrou 8 sont également en contact mutuel le long d'une surface d'appui 21 afin que la rotation du levier provoque la rotation du verrou autour de l'axe 15 contre l'action du ressort 19.

Sur la figure 5, on a illustré les mouvements respectifs des différentes pièces du boîtier 4. Lorsque le palpeur 6 est actionné en translation selon la flèche F1 sous l'action de la pièce mobile, il provoque la rotation du levier 7 selon la flèche F2. Cette rotation s'accompagne d'une pression du levier 7 sur le verrou 8 qui est alors entraîné en rotation selon la flèche F3. On a calculé que la translation du palpeur entraînait un déplacement du verrou d'au moins 20 fois par rapport à la course de ce palpeur.

On voit que l'immobilisation de l'arbre 3 est assuré dès que le tube 1 s'éloigne de quelques dixièmes de mm du manchon 2 ou est complètement absent. En revanche, le mouvement circulaire du verrou permet de dégager la dent de loup de la roue à rochet de l'arbre de transmission.

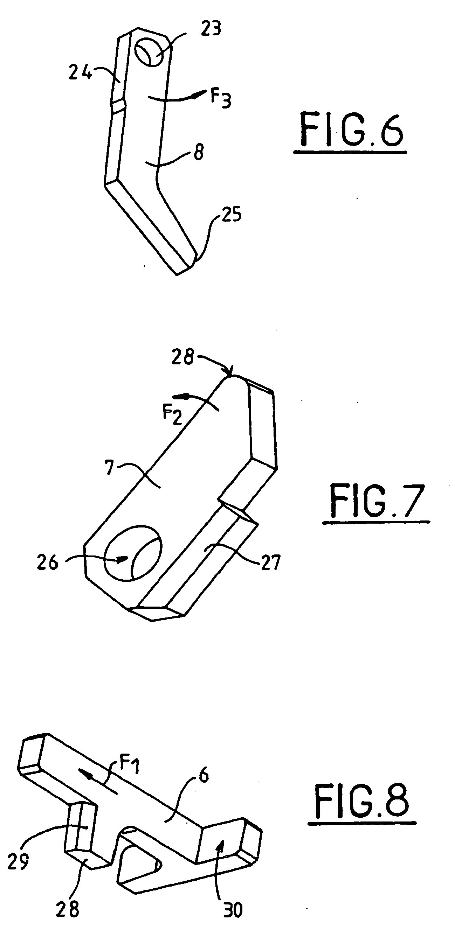

Sur la figure 6, on a représenté le verrou 8 se présentant sous la forme d'un L ouvert dont une branche est munie d'une ouverture 23 recevant l'axe 15 et d'une surface 24 et dont l'autre branche est terminée par une dent de loup 25 destinée à coopérer avec l'arbre de transmission.

Le verrou peut également intégrer un appui en lieu et place ou en complément de la dent de loup. Cet appui est destiné à commander soit un distributeur hydraulique ou pneumatique, soit un interrupteur électrique.

Sur la figure 7, on a représenté le levier amplificateur 7 muni d'une ouverture 26 de réception de l'axe 17 et d'une surface inclinée 27. L'axe 17 porte un excentrique permettant de modifier, dans le boîtier de sécurité, la position de l'ouverture 26 du levier amplificateur. Ce déplacement permet ainsi de modifier la course de rotation du levier et donc le rapport d'amplification du mouvement du verrou. Enfin, le levier amplificateur 7 pivote sur un axe réglable grâce à l'excentrique intégré sur l'axe 17.

Sur la figure 8, on a représenté le palpeur 6 se présentant sous la forme d'un T dont la jambe est munie d'un doigt 28 muni d'une surface 29. La barre du T comporte une surface d'appui 30 de son ressort 19.

Le boîtier 4 constitue avec le palpeur, le levier et le verrou un ensemble monobloc de raideur élevée capable de dissiper dans le verrou l'énergie cinétique emmagasinée dans l'arbre de transmission 3 lors de son immobilisation. Le verrou, représenté monobloc donc à raideur élevée, peut être remplacé par un ensemble de trois composants : le verrou, le ressort dissipateur d'énergie( éventuellement sous forme d'élastomère) et le corps du verrou. Ce sous-ensemble, autorisant la translation sans effort du verrou dans le corps du verrou, permet de dissiper l'énergie fournie par l'arbre de transmission lors de son blocage.

Le fonctionnement est le suivant. Lorsque le palpeur 6 est actionné en translation par la pièce 1 contre l'action du ressort 18, la surface 29 du doigt 28 vient en contact avec la surface 27 du levier 7. Cette action du palpeur engendre un glissement de la surface 29 sur la surface 27 provoquant la rotation du levier 7 autour de l'axe 17. La rotation du levier 7 amène en contact sa surface 28 avec la surface 24 du verrou 8. Le verrou 8 est alors actionné en rotation selon un déplacement important permettant de dégager la dent de loup 25 de l'arbre de transmission. On comprend que ce déplacement important peut être utilisé pour commander un interrupteur électrique ou assurer toute autre commande d'un mécanisme quelconque.

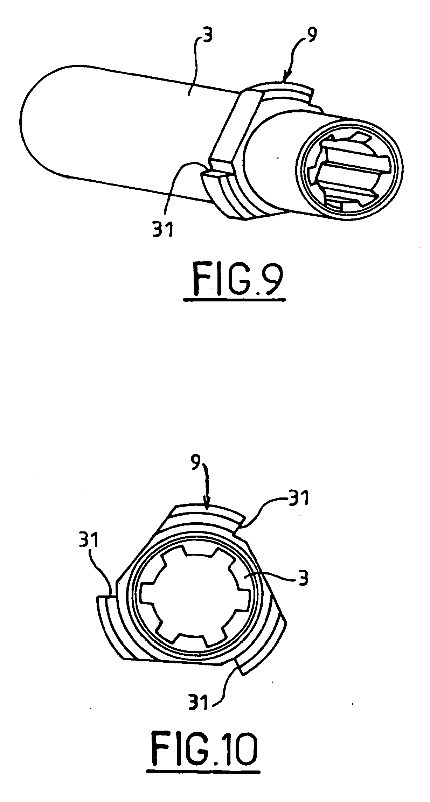

Sur les figures 9 et 10, on a représenté l'arbre de transmission 3 muni de la roue à rochet 9 délimitant des cames 31 sur lesquels le verrou 8 vient en appui bloquant ainsi toute rotation de l'arbre de transmission 3. Grâce à la translation du palpeur 6 et des rotations successives du levier 7 et du verrou 8, la dent de loup du verrou est escamotée par rapport à une came libérant l'arbre de transmission 3. Ainsi, tant que la rotation du verrou 8 n'est pas complète la rotation de l'arbre 3 est bloquée et aucune transmission de mouvement n'est assurée rendant ainsi le fonctionnement du dispositif fiable et exempt de disfonctionnements.

La commande manuelle est dite sécurité homme mort à relâchement car elle correspond au mécanisme additionnel imposant un appui manuel constant (bouton poussoir par exemple) et dont l'arrêt de l'action provoque le retour en position repos du bouton poussoir et la translation du palpeur sous l'action de son ressort. Le blocage de la rotation de l'arbre de transmission par le verrou est ainsi garanti dès que cesse l'action manuelle sur le bouton poussoir.

## Revendications

1. Dispositif de sécurité de contact entre deux pièces mécaniques (1, 2) mobiles l'une par rapport à l'autre pour garantir la cinématique interne par libération ou initiation d'un moyen de commande (3), **caractérisé en ce qu'**il comporte un boîtier de sécurité (4) destiné à être relié à l'une desdites pièces (1, 2) et renfermant un palpeur (6) actionné par le mouvement de l'autre pièce mobile (2, 1) et un moyen amplificateur (7, 8) constitué d'un levier amplificateur (7) actionné par le palpeur (6) et d'un verrou de blocage (8) actionné par le levier amplificateur en prise sur le moyen de commande (3) afin de transformer un micro-déplacement rectiligne du palpeur (6) en un mouvement circulaire de grande ampleur du verrou de blocage (8).

2. Dispositif de sécurité de contact selon la revendication 1, **caractérisé en ce que** le palpeur (6) est actionné en translation et le levier (7) et le verrou (8) sont actionnés en rotation.

3. Dispositif de sécurité de contact selon la revendication 1 ou 2, **caractérisé en ce que** le moyen de commande (3) est représenté par un distributeur hydraulique ou pneumatique, ou un interrupteur électrique.

4. Dispositif de sécurité de contact selon la revendication 1 ou 2**, caractérisé en ce que** le moyen de commande (3) est représenté par un arbre de transmission (3), les deux pièces mécaniques (1, 2) étant constituées par un tube (1) d'arme et un manchon (2) de culasse.

5. Dispositif de sécurité de contact selon la revendication 4, **caractérisé en ce que** le boîtier de sécurité (4) est fixé sur le manchon (2) de culasse au voisinage de l'arbre de transmission.

6. Dispositif de sécurité de contact selon la revendication 5, **caractérisé en ce que** le verrou de blocage (8) est en prise sur une came (31) portée par l'arbre de transmission.

7. Dispositif de sécurité selon la revendication 5 ou 6, **caractérisé en ce que** le boîtier de sécurité (4) se présente sous la forme d'une pièce monobloc munie d'un premier alésage (13) dans lequel coulisse le palpeur (6) et un deuxième alésage (14) dans lequel sont insérés le levier amplificateur (7) et le verrou (8), les deux alésages (13, 14) étant disposés selon des directions sensiblement perpendiculaires.

8. Dispositif de sécurité selon la revendication 7, **caractérisé en ce que** le levier amplificateur (7) et le verrou (8) sont en contact l'un de l'autre au niveau d'une came (24, 27) pour assurer leur rotation chacun autour d'un axe (15, 17) fixé sur le boîtier de sécurité (4).

9. Dispositif de sécurité selon l'une quelconque des revendications 4 à 8, **caractérisé en ce que** le palpeur (6) et le verrou (8) sont soumis chacun à l'action d'un moyen de rappel (18, 19).

10. Dispositif de sécurité selon l'une quelconque des revendications 4 à 9, **caractérisé en ce que** le verrou de blocage (8) est en appui sur une butée réglable (16).

## Claims

1. A contact safety device between two mechanical parts (1, 2) mobile which respect to one another to guarantee the internal kinematics, by the release or activation of control means (3), **characterised in that** it incorporates a safety unit (4) intended to be connected to one of said parts (1, 2) and enclosing a probe (6) activated by the movement of the other part (2, 1) and amplifying means (7, 8) constituted by an amplifying lever (7) activated by the probe (6) and an immobilising lock (8) activated by the amplifying lever meshed on the control means (3) so as to transform a rectilinear micro-movement of the probe (6) into a circular movement of large magnitude of the immobilising block (8).

2. A contact safety device according to Claim 1, **characterised in that** the probe (6) is activated in translation and the lever (7) and lock (8) are activated in rotation.

3. A contact safety device according to Claims 1 or 2, **characterised in that** the control means (3) are represented by a hydraulic or pneumatic distributor, or electric switch.

4. A contact safety device according to Claim 1 or 2, **characterised in that** the control means (3) are represented by a drive shaft (3), the two mechanical parts (1, 2) being constituted by a gun barrel (1) and a breech ring (2).

5. A contact safety device according to Claim 4, **characterised in that** the safety unit (4) is fixed to the breech ring (2) near to the drive shaft.

6. A contact safety device according to Claim 5, **characterised in that** the immobilising lock (8) is meshed onto a cam (31) carried on the drive shaft.

7. A contact safety device according to Claim 5 or 6, **characterised in that** the safety unit (4) is in the form of a single-piece fitted with a first bore (13) in which the probe (6) slides and a second bore (14) in which the amplifying lever (7) and lock (8) are inserted, both bores (13, 14) being positioned in substantially perpendicular directions.

8. A safety device according to Claim 7, **characterised in that** the amplifying lever (7) and lock (8) are in contact with one another by a cam (24, 27) to ensure their rotation each around a pin (15, 17) fixed on the safety unit (4).

9. A safety device according to any one of Claims 4 to 8, **characterised in that** the probe (6) and the lock (8) are each subjected to the action of return means (18, 19).

10. A safety device according to any one of Claims 4 to 9, **characterised in that** the immobilising lock (8) presses on an adjustable limit stop (16).

## Patentansprüche

1. Sicherheitsvorrichtung für Kontakt zwischen zwei mechanischen Teilen (1, 2), die in Bezug zueinander beweglich sind, um die interne Kinematik durch Auslösen oder Initiierung eines Steuermittels (3) zu garantieren, **dadurch gekennzeichnet, dass** sie ein Sicherheitsgehäuse (4) umfasst, das dafür vorgesehen ist, mit einem der genannten Teile (1, 2) verbunden zu sein und einen Fühler (6), der durch die Bewegung des anderen Teils (1) betätigt wird, und ein Verstärkungsmittel (7, 8) einschließt, das von einem durch den Fühler (6) angetriebenen Verstärkungshebel (7) und einem Sperrriegel (8) gebildet wird, der von dem Verstärkungshebel angetrieben wird, der in Eingriff mit dem Steuermittel (3) ist, um eine geradlinige Mikroverlagerung des Fühlers (6) oder des Sperrriegels (8) in eine kreisförmige Bewegung mit großem Ausmaß des anderen Elementes des Fühlers (6) oder des Sperrriegels (8) zu verwandeln.

2. Kontakt-Sicherheitsvorrichtung nach Anspruch 1, **dadurch gekennzeichnet, dass** der Fühler (6) in Verschieberichtung angetrieben wird und der Hebel (7) und der Riegel (8) in Drehbewegung angetrieben werden.

3. Kontakt-Sicherheitsvorrichtung nach Anspruch 1 oder 2, **dadurch gekennzeichnet, dass** das Steuermittel (3) von einem hydraulischen oder pneumatischen Verteiler oder einem elektrischen Schalter gebildet wird.

4. Kontakt-Sicherheitsvorrichtung nach Anspruch 1 oder 2, **dadurch gekennzeichnet, dass** das Steuermittel (3) von einer Antriebswelle (3) gebildet wird, wobei die beiden mechanischen Teile (1, 2) von einem Waffenrohr (1) und einer Bodenstückmuffe (2) gebildet werden.

5. Kontakt-Sicherheitsvorrichtung nach Anspruch 4, **dadurch gekennzeichnet, dass** das Sicherheitsgehäuse (4) an der Bodenstückmuffe (2) in der Nähe der Antriebswelle befestigt ist.

6. Kontakt-Sicherheitsvorrichtung nach Anspruch 5, **dadurch gekennzeichnet, dass** der Sperrriegel (8) in Eingriff mit einer Kurvenscheibe (31) ist, die von der Antriebswelle getragen wird.

7. Sicherheitsvorrichtung nach Anspruch 5 oder 6, **dadurch gekennzeichnet, dass** das Sicherheitsgehäuse (4) sich in der Form eines Monoblock-Teils darstellt, das mit einer ersten Bohrung (13), in welcher der Fühler (6) gleitet, und einer zweiten Bohrung (14) versehen ist, in welcher der Verstärkungshebel (7) und der Riegel (8) eingesetzt sind, wobei die beiden Bohrungen (13, 14) gemäß im wesentlichen senkrechten Richtungen angeordnet sind.

8. Sicherheitsvorrichtung nach Anspruch 7, **dadurch gekennzeichnet, dass** der Verstärkungshebel (7) und der Riegel (8) im Bereich einer Nocke (24, 27) miteinander in Kontakt sind, um ihre Drehung jeweils um eine Achse (15, 17) zu gewährleisten, die an dem Sicherheitsgehäuse (4) befestigt ist.

9. Sicherheitsvorrichtung nach irgendeinem der Ansprüche 4 bis 8, **dadurch gekennzeichnet, dass** der Fühler (6) und der Riegel (8) jeweils der Einwirkung eines Rückstellmittels (18, 19) unterworfen sind.

10. Sicherheitsvorrichtung nach irgendeinem der Ansprüche 4 bis 9, **dadurch gekennzeichnet, dass** sich der Sperrriegel (8) an einem einstellbaren Anschlag (16) abstützt.
